# EUROPÄISCHE PATENTSCHRIFT

(11) **EP 1 990 755 B1**
(45) Veröffentlichungstag und Bekanntmachung des Hinweises auf die Patenterteilung: **09.06.2010**
(21) Anmeldenummer: 08008231.6
(22) Anmeldetag: 30.04.2008
(51) Int. Cl.: G06K 7/00

(54) **Verfahren zum Betrieb eins RFID-Tags mit genauer Lokalisierung**
Method for operating a RFID tag with exact localisation
Procédé de fonctionnement d'une étiquette RFID dotée d'une localisation exacte

(30) Priorität: 11.05.2007 DE 102007022065
(43) Veröffentlichungstag der Anmeldung: 12.11.2008
(73) Patentinhaber: Identec Solutions AG, 6890 Lustenau (AT)
(72) Erfinder: Gantner, Reinhold, 6700 Bludenz (AT)
(74) Vertreter: Riebling, Peter

(56) Entgegenhaltungen:
- DE-A1- 10 159 604
- DE-A1- 19 859 947
- DE-C1- 19 824 528
- DE-U1-202005 013 779
- US-A1- 2004 032 363
- US-A1- 2005 052 281

## Beschreibung

Gegenstand der Erfindung ist ein Verfahren zum Betrieb eines RFID-Tags mit genauer Lokalisierung nach dem Oberbegriff des Patentanspruches 1.

Zum Stand der Technik gehört die Tatsache, dass man mit Hilfe eines Markers ein induktives Feld erzeugt und in diesem induktiven Feld einen Transponder anspricht (triggert), der seinerseits ein bestimmtes Datenpaket an einen Reader sendet.

Bisher war es jedoch nicht bekannt, eine Anzahl von gleichartigen Markern in einem Raum anzuordnen, deren Nahfeld sich eventuell sogar überlagert. Es war deshalb nicht möglich, einen in diesem Raum angeordneten Transponder einem einzigen Marker zuzuordnen.

Es war deshalb nicht möglich, eine genaue Lokalisation dieses Transponders im Raum durchzuführen.

Der Erfindung liegt deshalb die Aufgabe zugrunde, ein Verfahren zum Betrieb eines Transponders so weiterzubilden, dass eine gute und genaue Lokalisierung des Transponders im Raum bei Vorhandensein verschiedener Marker gegeben ist.

Zur Lösung der gestellten Aufgabe ist die Erfindung durch die technische Lehre des Anspruches 1 gekennzeichnet.

Wesentliches Merkmal der Erfindung ist, dass jeder Marker ein induktives Nahfeld erzeugt und dass der Transponder von diesem Nahfeld getriggert wird.

Weiteres wesentliches Merkmal der Erfindung ist, dass nunmehr der Transponder eine Feldstärkenmessung durchführt, mit dem Ziel, festzustellen, welches induktive Nahfeld die größte Feldstärke an dem bestimmten Ort des Transponders hat.

Es wird also möglicherweise die Feldstärke aller vom Transponder empfangenen Nahfelder erfasst, und die Feldstärken werden miteinander verglichen. Diejenige Feldstärke, die in ihrer Amplitude am größten ist, ist ein Entscheidungskriterium, in welcher Nähe welchen induktiven Nahfeldes sich der Transponder befindet.

Hierauf ist die Erfindung jedoch nicht beschränkt. Die Erfindung sieht nicht nur die Erfassung des Maximums der Feldstärke des am nächsten liegenden Nahfeldes vor, sondern berücksichtigt auch die anderen Feldstärken aller anderen auf den Transponder einwirkenden Nahfelder.

Im Wege einer mathematischen Trilateration werden die verschiedenen Felder miteinander verrechnet. Nachdem man sich (siehe spätere Abbildung) im Nahfeld befindet, ist bekannt, dass das Nahfeld um einen Betrag von 60 dB/Dekade abnimmt.

Daraus kann nun die Position von dem jeweiligen Transponder berechnet werden.

Damit ist eine einwandfreie Lokalisierung des Transponders im Raum bei Einwirkung mehrerer induktiver Nahfelder von Markern auf diesen Transponder möglich.

Dies war bisher noch nicht bekannt.

Dank der Tatsache, dass die Marker nur induktive Nahfelder erzeugen und keine Fernfelder, ist es aufgrund der entfernungsabhängigen Dämpfung (60 dB/Dekade) sehr gut möglich, eine sehr genaue Lokalisierung des Transponders im Raum zu ermöglichen.

Dies ist ein wesentlicher Vorteil gegenüber dem Fernfeldvergleich, bei dem nur eine geringe Dämpfung über die Entfernung stattfindet. Bei gegebener Abstandsveränderung des Transponders zu dem Marker ist deshalb der Dämpfungsunterschied sehr gering, so dass er nur sehr schwieriggauswertbar ist.

Die Erfindung sieht deshalb vor, dass die Empfangsfeldstärke des Transponders von im Nahfeld sendenden Markern erfasst wird.

Bei sehr hohen Frequenzen, die beispielsweise im UHF-Bereich liegen, hat man Probleme mit Feldauslöschungen (Fading), die bei der vorliegenden Erfindung vermieden werden. Bevorzugt wird ein Frequenzbereich für die induktiven Nahfelder der einzelnen Marker im Bereich von < 20 MHz gewählt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert eine Draufsicht auf eine Anordnung von einem Transponder in zwei verschiedenen Ortszuständen in einem Nahfeld, welches von vier Markern erzeugt wird
- Figur 2:: die Blockschaltbildanordnung eines Transponders mit Auswertung der Feldstärke

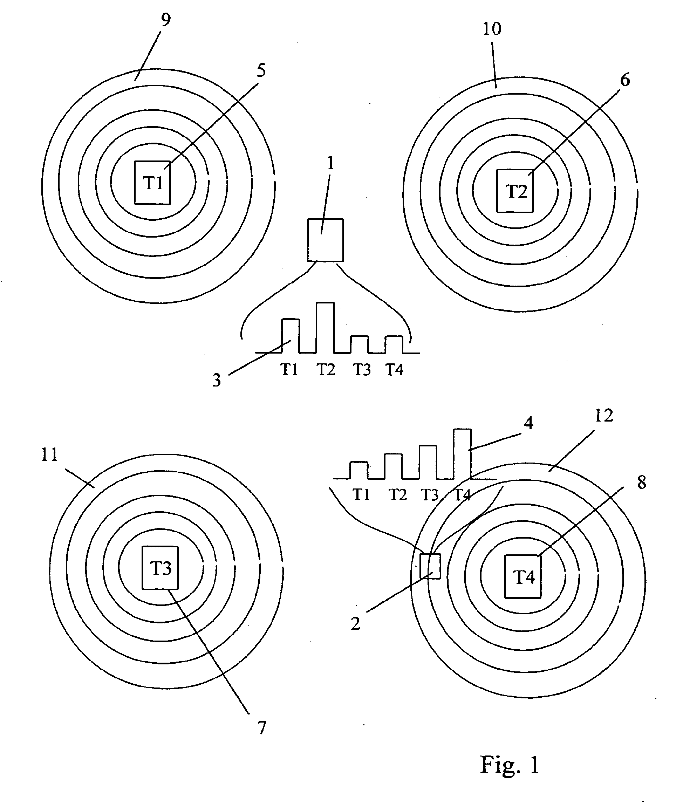

In Figur 1 ist allgemein ein Raum dargestellt, in dem insgesamt vier Marker 5, 6, 7, 8 ein induktives Nahfeld 9, 10, 11, 12 erzeugen.

Bei dem oben genannten Frequenzband hat das Nahfeld - frequenzabhängig - eine Reichweite von 10 cm bis etwa 10 m.

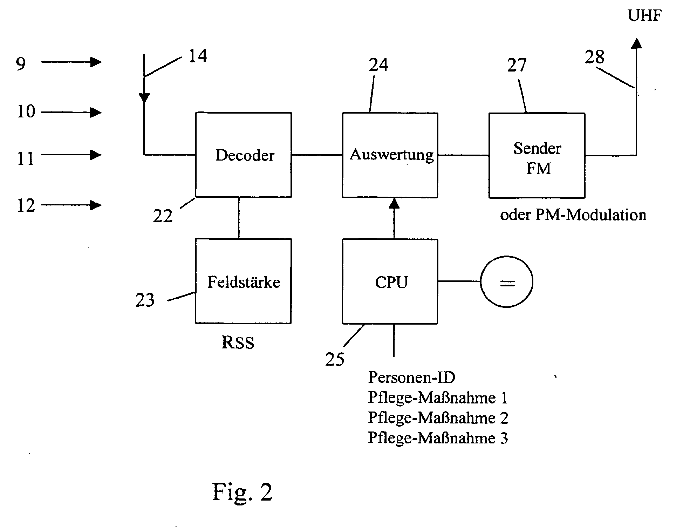

In diesem Nahfeld sei ein Transponder 1 angeordnet, der mit seiner Empfangsantenne 14 (siehe Figur 2) die Nahfelder 9-12 empfängt und auswertet.

Mit der Feldstärkeauswertung 3 werden somit zu einem bestimmten Zeitpunkt die Amplituden der Nahfelder 9-12 erfasst und ausgewertet.

Dies ergibt dann die dort gezeigte Feldstärke-Auswertung 3.

Man erkennt, dass der Transponder 1 näher dem Nahfeld 10 als vergleichsweise dem Nahfeld 9 ist und im Übrigen weiter entfernt von den Nahfeldern 11 und 12 ist.

Befindet sich jedoch der Transponder 1 an der Stelle eines Transponders 2 gemäß Figur 1, dann ist dort erkennbar, dass der Transponder 2 sich direkt im Nahfeld 12 befindet und die entsprechende Feldstärke-Auswertung 4 zeigt, dass das Nahfeld 12 die größte Feldstärke hat.

Durch eine Trilateration werden nun die einzelnen Feldstärkeverteilungen in den Feldstärkeauswertungen 3, 4 so miteinander in Verbindung gesetzt, dass man nun mit relativ hoher Auflösung im Zentimeterbereich den genauen Ort des Transponders 1 oder 2 im Raum in Bezug auf die Nahfelder 9-12 bestimmen kann.

Zu diesem Zweck ist in Figur 2 schematisiert dargestellt, dass zu einem bestimmten Zeitpunkt die Nahfelder 9-12 auf die Empfangsantenne 14 eines Decoders 22 des Transponders 1 oder 2 einwirken.

In dem Decoder wird das Telegramm von dem Marker des Nahfeldes 9-12 decodiert und es wird die Feldstärke in einem Feldstärkemodul 23 bestimmt.

Die decodierten Telegramme, die im Decoder im Ausgang anliegen, werden dazu verwendet, um Störungseinflüsse auszuschalten. Es kann nämlich geschehen, dass auf die Empfangsantenne 14 auch magnetische Störfelder einwirken und durch die Codierung der Nahfelder 9 mit entsprechenden Datentelegrammen wird im Decoder 22 entschieden, ob es sich um ein erfassbares Nahfeld 9-12 handelt oder um ein magnetisches Störfeld, welches auszublenden ist.

Demzufolge kann auch durch das entsprechende Datentelegramm, welches jedem einzelnen Nahfeld 9-12 zugeordnet wird, auch entschieden werden, um welches Nahfeld von welchem Marker 5-8 es sich handelt. Damit ist eine eindeutige Zuordnung des Nahfeldes zu dem jeweiligen Marker gegeben.

Am Ausgang des Decoders erfolgt also eine Auswertung 24 des entsprechenden Datendiagrammes in der Auswerteschaltung, und mit Hilfe einer CPU 25 wird die Entscheidungsfindung durchgeführt, welches Nahfeld welchem Marker zugeordnet ist.

Das Ergebnis der Nahfeldbetrachtung wird auf einen Sender 27 gegeben, der das Ergebnis als frequenzmoduliertes oder phasenmoduliertes Signal oder ein amplitudenmoduliertes Signal in einem bestimmten Sendebereich auf eine Sendeantenne 28 gibt, welche mit einem nicht näher dargestellten Reader in Verbindung steht.

Im Reader wird nun schließlich die Ortsinformation empfangen, an welcher Stelle im Raum sich genau der Transponder 1 in Bezug auf die erzeugten Nahfelder 9-12 befindet.

In der dargestellten Ausführungsform war die Ausführung beschrieben worden, bei der der Transponder selbst seine Nahfeldbetrachtung durchführt und die Ortsinformation durch die eingebaute CPU und die Auswerteschaltung zur Verfügung stellt und an einen entfernten Reader sendet.

In einer anderen Ausgestaltung kann es vorgesehen sein, dass eine entsprechende Auswertung im Transponder entfällt und dass nur beispielsweise eine Feldstärkenbetrachtung im Transponder stattfindet und dass in einer übergeordneten Recheneinheit, die z. B. im Reader angeordnet ist, die Ortsfeld(Lokalisierung)-Bestimmung stattfindet.

Es werden demzufolge bei diesem Beispiel nur die Feldstärkewerte zusammen mit der Auswertung der Datendiagramme übertragen um dann in der übergeordneten Recheneinheit (beispielsweise im Reader) die Ortsinformation zu errechnen.

In einem Beispiel erfolgt die Berechnung der Ortsinformation durch das bekannte Trilaterationsverfahren.

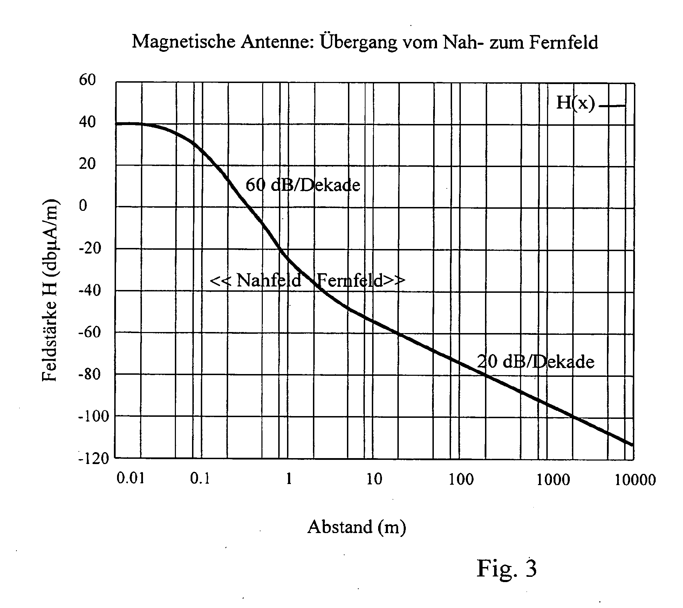

In Figur 3 der vorliegenden Erfindung ist die Definition des Nahfeldes angegeben, aus dem erkennbar ist, wie das Nahfeld definiert ist.

Das von einer Leiterschleife primär erzeugte magnetische Feld beginnt unmittelbar an der Antenne. Bei der Ausbreitung des magnetischen Feldes bildet sich durch Induktion zunehmend auch ein elektrisches Feld aus. Das ursprünglich rein magnetische Feld geht so kontinuierlich in ein elektromagnetisches Feld über. In der Entfernung λ/2π beginnt sich zusätzlich das elektromagnetische Feld von der Antenne abzulösen und als elektromagnetische Welle in den Raum zu wandern. Der Bereich von der Antenne bis zur Ausbildung des elektromagnetischen Feldes wird als Nahfeld der Antenne bezeichnet. Der Bereich, ab dem sich die elektromagnetische Welle vollständig ausgebildet und von der Antenne abgelöst hat, wird als Fernfeld bezeichnet.

Eine abgelöste elektromagnetische Welle kann nicht mehr durch induktive oder kapazitive Kopplung auf die Antenne, von der sie erzeugt wurde, zurückwirken. Für induktiv gekoppelte RFID-Systeme bedeutet dies, dass mit dem Beginn des Fernfeldes eine transformatorische (induktive) Kopplung nicht mehr möglich ist. Der Beginn des Fernfeldes (mit dem Radius r_{F} = λ/2π als grobem Richtwert) um die Antenne stellt also eine unüberschreitbare Reichweitengrenze für induktiv gekoppelte Systeme dar.

Der Feldstärkeverlauf einer magnetischen Antenne entlang der Spulenachse x folgt im Nahbereich der Beziehung 1/d³, wie oben bereits gezeigt wurde. Dies entspricht einer Dämpfung von 60 dB pro Dekade (der Entfernung). Beim Übergang zum Fernfeld hingegen tritt eine Abflachung des Dämpfungsverlaufes ein, da nach Ablösung des Feldes von der Antenne für den Feldstärkeverlauf ausschließlich die Freiraumdämpfung elektromagnetischer Wellen von Bedeutung ist. Die Feldstärke nimmt dann mit zunehmender Entfernung nur noch im Verhältnis 1/d ab. Dies entspricht einer Dämpfung von nur mehr 20 dB pro Dekade (der Entfernung).

Zweck der vorliegenden Anmeldung ist eine genaue Ortslokalisierung von Transpondern im Raum, dies kann z. B. vorkommen, wenn in einem größeren Lagerraum eine Vielzahl von mit Transpondern bestückten Kisten vorhanden sind und nicht genau erfassbar ist, wo die Kiste genau in dem Raum ist. Hier können Marker ortsfest im Raum angeordnet werden und entsprechend definierte Nahfeld erzeugen und mit der gegebenen Erfindung kann nun genau festgestellt werden, an welchem Ort im Raum sich die gesuchte Kiste befindet.

Ein anderes Ausführungsbeispiel der vorliegenden Erfindung besteht darin, dass oberhalb eines laufenden Fertigungsbandes, z. B. in der Kraftfahrzeugindustrie bei der Fertigung eines Kraftfahrzeuges eine Anzahl von Markern ortsfest befestigt sind, die ein sehr kurzes induktives Nahfeld erzeugen. Dieses Nahfeld wirkt in Richtung auf eine vorbeifahrende Karosse, die sich im Fertigungsprozess befindet, wobei jede Karosse mit einem Transponder versehen ist.

Ebenso trägt ein Arbeiter, der bestimmte Tätigkeiten an der Karosse ausführt, einen Transponder mit sich. Genauer gesagt ist dieser Transponder am Werkzeug des Arbeiters angeordnet.

Durch die angegebene Lokalisierung nach der vorliegenden Erfindung ist es ohne Weiteres möglich, dass nun aufgrund des erzeugten Nahfeldes oberhalb der Karosse eine einwandfreie Zuordnung des Werkzeuges des Benutzers zu dem Fahrzeug hergestellt wird, welches gerade von dem Benutzer bearbeitet wird. Auf diese Weise kann eine einwandfreie Dokumentation erstellt werden, welches Werkzeug zu welchem Zeitpunkt an welcher Stelle des Fertigungsbandes auf ein Fahrzeug eingewirkt hat und dort entsprechende Fertigungsvorgänge ausgeführt hat.

### Zeichnungslegende

- 1: Transponder
- 2: Transponder
- 3: Feldstärke-Auswertung
- 4: Feldstärke-Auswertung
- 5: Marker (induktiver Bakensender)
- 6: Marker (induktiver Bakensender)
- 7: Marker (induktiver Bakensender)
- 8: Marker (induktiver Bakensender)
- 9: Nahfeld
- 10: Nahfeld
- 11: Nahfeld
- 12: Nahfeld
- 13:
- 14: Empfangsantenne (induktiv)
- 15:
- 16:
- 17:
- 18:
- 19:
- 20:
- 21:
- 22: Decoder
- 23: Feldstärke-Modul
- 24: Auswertung
- 25: CPU
- 26:
- 27: Sender
- 28: Sendeantenne

## Patentansprüche

1. Verfahren zum Betrieb eines RFID-Transponders (1, 2), wobei mit Hilfe eines Markers (5-8) ein induktives/magnetisches Nahfeld (9-12) erzeugt wird, dessen Feldstärke von dem RFID-Transponder (1, 2) gemessen wird, welcher Daten an einen Reader sendet, wobei mindestens zwei Marker (5-8) vorgesehen sind, deren Feldstärken der induktiven/magnetischen Nahfelder (9-12) vom RFID-Transponder (1, 2) gemessen werden, **dadurch gekennzeichnet, dass** zu einem bestimmten Zeitpunkt die Nahfelder (9-12) auf eine Empfangsantenne (14) eines Decoders (22) des Transponders (1, 2) einwirken und in dem Decoder (22) ein Telegramm von dem Marker (5-8) des Nahfeldes (9-12) decodiert wird und dass am Ausgang des Decoders (22) eine Auswertung des entsprechenden Datendiagrammes in einer Auswerteschaltung (24) erfolgt, und mit Hilfe einer CPU (25) die Entscheidungsfindung durchgeführt wird, welches Nahfeld (9-12) welchem Marker (5-8) zugeordnet ist und dass das Ergebnis der Nahfeldbetrachtung auf einen Sender (27) gegeben wird, der das Ergebnis als frequenzmoduliertes oder phasenmoduliertes Signal oder ein amplitudenmoduliertes Signal in einem bestimmten Sendebereich auf eine Sendeantenne (28) gibt, welche mit dem Reader in Verbindung steht und dass im Reader die Ortsinformation empfangen wird, an welcher Stelle im Raum sich genau der Transponder (1, 2) in Bezug auf die erzeugten Nahfelder (9-12) befindet.

2. Verfahren nach Anspruch 1, **dadurch gekennzeichnet, dass** die induktiven Nahfelder (9-12) eine Dämpfung von ca. 60 dB/Dekade der Entfernung besitzen.

3. Verfahren nach Anspruch 1 oder 2, **dadurch gekennzeichnet, dass** die Nahfelder (9-12) mindestens zweier Marker (5-8) vom RFID-Transponder (1, 2) gemessen werden.

4. Verfahren nach einem der Ansprüche 1 bis 3, **dadurch gekennzeichnet, dass** die Nahfelder (9-12) mindestens zweier Marker (5-8) sich überlagern.

5. Verfahren nach einem der Ansprüche 1 bis 4, **dadurch gekennzeichnet, dass** im Wege einer mathematischen Trilateration die verschiedenen Feldstärken der induktiven Nahfelder (9-12) miteinander verrechnet werden und daraus der Abstand des Markers (5-8) vom RFID-Transponder (1, 2) berechnet wird.

6. Verfahren nach einem der Ansprüche 1 bis 5, **dadurch gekennzeichnet, dass** ein Frequenzbereich für die induktiven Nahfelder (9-12) der einzelnen Marker (5-8) im Bereich von kleiner 20 MHz gewählt wird.

7. Verfahren nach einem der Ansprüche 1 bis 6, **dadurch gekennzeichnet, dass** die Feldstärke der Nahfelder (9-12) in einem Feldstärkemodul (23) bestimmt wird.

8. Verfahren nach einem der Ansprüche 1 bis 7, **dadurch gekennzeichnet, dass** in einer übergeordneten Recheneinheit, die z. B. im Reader angeordnet ist, die Ortsfeld(Lokalisierung)-Bestimmung stattfindet.

## Claims

1. Method for operating an RFID transponder (1, 2), wherein with the aid of a marker (5 to 8) an inductive/magnetic near field (9 to 12) is generated, the field intensity of which is measured by the RFID transponder (1, 2), which sends data to a reader, at least two markers (5 to 8) being provided, the field intensities of the inductive/magnetic near fields (9 to 12) of which are measured by the RFID transponder (1, 2), **characterised in that** at a specific time, the near fields (9 to 12) act on a receiving antenna (14) of a decoder (22) of the transponder (1, 2) and a message from the marker (5 to 8) of the near field (9 to 12) is decoded in the decoder (22) and **in that** an evaluation of the corresponding data diagram takes place in an evaluation circuit (24) at the output of the decoder (22), and with the aid of a CPU (25), the decision making is carried out regarding which near field (9 to 12) is associated with which marker (5 to 8), and **in that** the result of the near field consideration is passed to a transmitter (27), which passes the result as a frequency-modulated or phase-modulated signal or an amplitude-modulated signal in a specified transmitting range to a transmitting antenna (28), which is connected to the reader, and **in that** the local information is received in the reader regarding at which location precisely in the space the transponder (1, 2) is located in relation to the near fields (9 to 12) generated.

2. Method according to claim 1, **characterised in that** the inductive near fields (9 to 12) have an attenuation of about 60 dB/decade of the distance.

3. Method according to claim 1 or 2, **characterised in that** the near fields (9 to 12) of at least two markers (5 to 8) are measured by the RFID transponder (1, 2).

4. Method according to any one of claims 1 to 3, **characterised in that** the near fields (9 to 12) of at least two markers (5 to 8) overlap.

5. Method according to any one of claims 1 to 4, **characterised in that** in the course of a mathematical trilateration, the different field intensities of the inductive near fields (9 to 12) are calculated with one another and the distance of the marker (5 to 8) from the RFID transponder (1, 2) is calculated from this.

6. Method according to any one of claims 1 to 5, **characterised in that** a frequency range for the inductive near fields (9 to 12) of the individual markers (5 to 8) is selected in the range of less than 20 MHz.

7. Method according to any one of claims 1 to 6, **characterised in that** the field intensity of the near fields (9 to 12) is determined in a field intensity module (23).

8. Method according to any one of claims 1 to 7, **characterised in that** the local field (localisation) determination takes place in a higher-level arithmetic logic unit, which is arranged in the reader, for example.

## Revendications

1. Procédé pour le fonctionnement d'un transpondeur RFID (1, 2), selon lequel est produit, à l'aide d'un marqueur (5-8), un champ proche inductif/magnétique (9-12) dont l'intensité est mesurée par le transpondeur RFID (1, 2), lequel envoie des données à un lecteur, et il est prévu au moins deux marqueurs (5-8) dont les intensités des champs proches inductifs/magnétiques (9-12) sont mésurées par le transpondeur RFID (1, 2), **caractérisé en ce qu'**à un moment défini, les champs proches (9-12) agissent sur une antenne de réception (14) d'un décodeur (22) du transpondeur (1, 2) et dans le décodeur (22) est décodé un télégramme du marqueur (5-8) du champ proche (9-12), et **en ce qu'**une analyse du schéma de données correspondant a lieu dans un circuit d'analyse (24), à la sortie du décodeur (22), et à l'aide d'une unité centrale (25) la prise de décision est effectuée pour savoir quel champ proche (9-12) est associé à quel marqueur (5-8), et **en ce que** le résultat de l'observation de champ proche est transmis à un émetteur (27) qui transmet ledit résultat, sous forme de signal modulé en fréquence ou en phase, ou un signal modulé en amplitude dans une zone d'émission définie à une antenne d'émission (28) qui est reliée à un lecteur, et **en ce que** l'information locale est reçue dans le lecteur, indiquant à quel endroit dans l'espace se trouve exactement le transpondeur (1, 2) par rapport aux champs proches (9-12) produits.

2. Procédé selon la revendication 1, **caractérisé en ce que** les champs inductifs (9-12) ont une atténuation d'environ 60 db/décade de l'éloignement.

3. Procédé selon la revendication 1 ou 2, **caractérisé en ce que** les champs proches (9-12) d'au moins deux marqueurs (5-8) sont mesurés par le transpondeur RFID (1, 2).

4. Procédé selon l'une des revendications 1 à 3, **caractérisé en ce que** les champs proches (9-12) d'au moins deux marqueurs (5-8) se recouvrent.

5. Procédé selon l'une des revendications 1 à 4, **caractérisé en ce que** dans le cadre d'une trilatération mathématique les différentes intensités des champs proches inductifs (9-12) sont comparées, et à partir de là la distance entre le marqueur (5-8) et le transpondeur RFID (1, 2) est calculée.

6. Procédé selon l'une des revendications 1 à 5, **caractérisé en ce qu'**une plage de fréquence pour les champs proches inductifs (9-12) des marqueurs individuels (5-8) est choisie dans la zone inférieure à 20 MHz.

7. Procédé selon l'une des revendications 1 à 6, **caractérisé en ce que** l'intensité des champs proches (9-12) est définie dans un module d'intensité de champ (23).

8. Procédé selon l'une des revendications 1 à 7, **caractérisé en ce que** dans une unité de calcul supérieure, qui est disposée par exemple dans le lecteur, a lieu la définition de champ local (localisation).
